# EUROPEAN PATENT SPECIFICATION

(11) **EP 1 385 010 B1**
(45) Date of publication and mention of the grant of the patent: **30.07.2008**
(21) Application number: 03013642.8
(22) Date of filing: 16.06.2003
(51) Int. Cl.: G01P 15/18, G01P 15/12, B81C 1/00

(54) **Semiconductor acceleration sensor using doped semiconductor layer as wiring**
Halbleiter-Beschleunigungsaufnehmer mit dotierten Halbleiterschichten zur Verdrahtung
Accéléromètre semiconducteur utilisant des couches semiconductrices dotées comme conducteurs

(30) Priority: 26.07.2002 JP 2002217359
(43) Date of publication of application: 28.01.2004
(73) Proprietor: MATSUSHITA ELECTRIC WORKS, LTD., Kadoma-shi, Osaka 571-8686 (JP)
(72) Inventor: Yoshida, Hitoshi, c/o Matsushita El. Works, Ltd., Kadoma-shi, Osaka 571-8686 (JP); Kataoka, Kazushi, c/o Matsushita El. Works, Ltd., Kadoma-shi, Osaka 571-8686 (JP); Wakabayashi, Daisuke, Matsushita El. Works, Ltd., Kadoma-shi, Osaka 571-8686 (JP); Goto, Koji, Matsushita El. Works, Ltd., Kadoma-shi, Osaka 571-8686 (JP)
(74) Representative: Appelt, Christian W.

(56) References cited:
- EP-A- 0 899 574
- EP-B- 0 631 142
- US-A- 4 869 107
- US-A- 5 408 112
- PATENT ABSTRACTS OF JAPAN vol. 1997, no. 06, 30 June 1997 (1997-06-30) -& JP 09 045937 A (MATSUSHITA ELECTRIC WORKS LTD), 14 February 1997 (1997-02-14)

## Description

### BACKGROUND OF THE INVENTION

### 1. Field of the Invention

The present invention relates to a semiconductor acceleration sensor using (piezoresistive) effect, and particularly a semiconductor multi-axial acceleration sensor using a doped semiconductor layer as wiring for accurately detecting acceleration in plural directions, which are preferably used for automobiles, home electric appliances, and so on.

### 2. Disclosure of the Prior Art

In the past, a piezoelectric-type or a capacitance-type semiconductor acceleration sensor has been widely used in various applications of automobiles, home electric appliances, and so on. As the piezoelectric-type semiconductor acceleration sensor, for example, Japanese Patent Early Publication No. 11-160348 discloses semiconductor multi-axial acceleration sensor for detecting acceleration in plural directions.

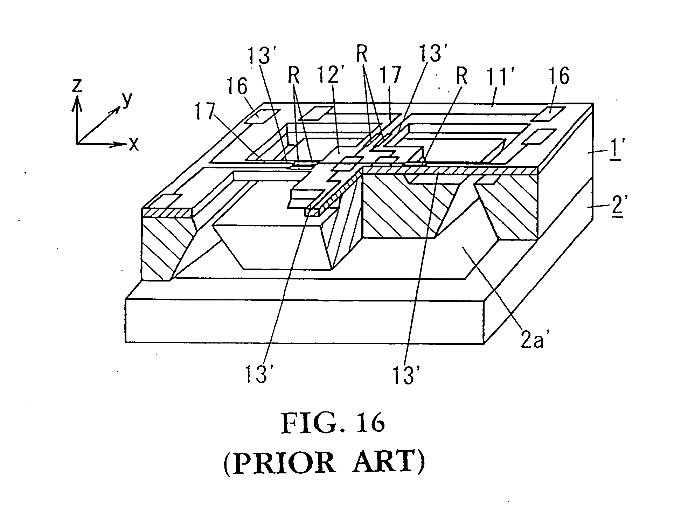

As shown in FIG. 16, this sensor is formed with a sensor body **1'** having a frame **11'**, a weight **12'** and two pairs of beams **13'**, via which the weight is supported in the frame, and resistor elements **R** are formed on each of the beams. The frame **11'**, the weight **12'** and the beams **13'** are integrally molded by a semiconductor material such as silicon. The numeral **2'** designates a glass cover, to which the sensor body **1'** is fixed. The numeral **2a'** designates a space provided between the sensor body **1'** and the glass cover **2'**, by which a positional displacement of the weight **12'** against the frame **11'** is allowed. When this acceleration sensor receives acceleration, the positional displacement of the weight **12'** occurs. At this time, strains caused in the beams **13'** by the positional displacement of the weight **12'** change electrical resistivity of the resistor elements **R** formed on the beams **13'**. According to the changes in electrical resistivity, the acceleration can be detected in three different directions from each other by 90 degrees, i.e., X, Y and Z axis directions.

By the way, in the conventional semiconductor multi-axial acceleration sensor, a wiring for electrically connecting the resistor element **R** on the respective beam **13'** with a pad **16** formed on the frame **11'** is provided by a metal layer **17**. In this case, a bimetal structure is formed on the beam **13'** by the metal layer **17** and the semiconductor material such as silicon of the beam **13'.** For example, when a temperature of the acceleration sensor increases according to changes in ambient temperature, a thermal stress derived from a difference of thermal expansion coefficient between the metal layer and silicon occurs in the beam **13'**, so that the detection accuracy of acceleration may lower due to the influence of the thermal stress. In particular, when the beam **13'** has a relatively large size in the length direction to improve the detection accuracy of acceleration, the influence of the thermal stress caused by the formation of the bimetal structure on the detection accuracy of acceleration markedly increases. Thus, there is a problem that the formation of the metal layer **17** on the beam **13'** leads to a deterioration of the detection accuracy of the acceleration sensor.

In addition, this kind of acceleration sensor has a plurality of bridge circuits, each of which is obtained by making an electrical connection among four resistor elements. In this case, as a temperature dependency of an offset voltage (i.e., a voltage output from the sensor in an acceleration free state) of the bridge circuit increases, operational reliability of the acceleration sensor lowers. Therefore, it is desired to reduce the offset voltage of the bridge circuit over a relatively wide working temperature range, e.g. -40°C to 80°C. However, when the wiring for making the electrical connection between the resistor element R and the pad 16 is provided by the metal layer 17, there is another problem that a fluctuation width of the offset voltage increases due to the thermal hysteresis.

Acceleration sensors are e.g. known from EP 0 899 574 A1, disclosing an acceleration sensor element and a method of its manufacture, wherein the acceleration sensor comprises a frame, a sheet member, which has a plurality of flexible parts and a center part, each flexible part extending between at least a portion of an inner edge of the frame and the center part and being integrally connected to them, and a weight which has a neck part integrally connected to the center part of the sheet member and which is hung from the sheet member through the neck part. Another acceleration sensor is e.g. known from patent abstracts of Japan, JP 09-045937, referring to a specific fabrication of a triaxial acceleration sensor in which a step for pasting single crystal silicon layers is eliminated.

### SUMMARY OF THE INVENTION

It is therefore a primary object of the present invention to provide a semiconductor acceleration sensor, which has the capability of preventing a situation that detection accuracy of acceleration deteriorates due to undesirable thermal stress induced in a semiconductor acceleration sensor and to also minimize a fluctuation of the offset voltage.

This object is solved by a semiconductor acceleration sensor according to claim 1, claims 2 to 12 refer to preferred embodiments of the acceleration sensor according to claim 1.

The acceleration sensor of the present invention comprises a frame, a weight, at least one pair of beams made of a semiconductor material, via which the weight is supported in the frame, and at least one resistor element formed on each of the beams, thereby detecting acceleration according to piezoresistive effect of the resistor element. The semiconductor acceleration sensor is characterized by including a doped semiconductor layer formed in a top surface of each of the beams as a wiring for electrically connecting with the resistor element.

According to the present invention, since a difference in thermal expansion coefficient between the doped semiconductor layer and the semiconductor material of the beam is very small, it is possible to remarkably reduce the influence of undesirable thermal stress caused in the beam by the difference in thermal expansion coefficient on the detection accuracy of acceleration, as compared with the case that the acceleration sensor has a bimetal structure formed by the semiconductor material of the beam and a metal layer wiring formed on the beam.

It is preferred that each of the beams has a plurality of wirings, which substantially extend in a length direction of the beam such that the wirings are spaced away from each other in a width direction of the beam by a required distance, and wherein all of the wirings are provided by doped semiconductor layers. In particular, it is preferred that the top surface of each of the beams has only a wiring(s) provided by the doped semiconductor layer. It is also preferred that a total area of the wirings formed in the top surface of each of the beams by the doped semiconductor layers is larger than the total area of wiring free regions of the top surface thereof.

It is preferred that at least one pair of beams are two pairs of beams, one pair of which extends in an orthogonal direction to the other pair thereof, so that the semiconductor acceleration sensor has the capability of detecting acceleration in plural directions according to the piezoelectric effect of the resistor element. In this case, it is possible to provide the acceleration sensor as a semiconductor multi-axial acceleration sensor.

As a preferred arrangement of the resistor elements to detect the acceleration in two directions different from each other by 90 degrees, a pair of resistor elements are positioned on each of the beams in the vicinity of one end of the beam adjacent to the weight, so that the semiconductor acceleration sensor has a pair of bridge circuits for detecting the acceleration in the two directions, which are formed by use of the resistor elements. Alternatively, as another preferred arrangement of the resistor elements to detect the acceleration in three directions different from each other by 90 degrees, three resistor elements are positioned on each of the beams such that two of them are positioned in the vicinity of one end of the beam adjacent to the weight, and the remaining one of them is positioned in the vicinity of the opposite end of the beam, so that the semiconductor acceleration sensor has three bridge circuits for detecting the acceleration in the three directions, which are formed by use of the resistor elements.

It is also preferred that at least one of resistor element and the wiring of the doped semiconductor layer formed on each of the pair of beams have electrical resistances determined such that a total amount of heat generated by the at least one resistor element and the wiring of the doped semiconductor layer on one of the pair of beams are substantially equal to the amount of heat generated by them on the other beam. In this case, it is possible to minimize a fluctuation of the offset voltage, which is caused by heat generation at the beam, with respect to each of the bridge circuits.

It is preferred that the wiring of the doped semiconductor layer on one of the pair of beams has substantially the same pattern as the wiring of the doped semiconductor layer on the other beam. In this case, since an amount of stress induced in one of the pair of beams is substantially equal to the amount of stress induced in the other beam, it is possible to further reduce the offset voltage.

It is preferred that the weight has a first wiring of a doped semiconductor layer formed in a top surface thereof and a second wiring of a metal layer formed on the top surface, and wherein an insulating layer is provided at an intersection of the first and second wirings to electrically insulate the first wiring from the second wiring. In this case, it is possible to improve a degree of freedom of wiring design and facilitate downsizing the acceleration sensor.

It is preferred that each of the beams has a thermal oxide layer formed on the top surface thereof such that a thickness of the thermal oxide layer on the doped semiconductor layer is smaller than the thickness of the thermal oxide layer on a wiring free region of the top surface of the beam. In this case, when such an insulating film for protection having a low thermal conductivity such as silicon oxide is formed on the entire top surface of the beam, it is possible to efficiently release the heat generated by the doped semiconductor layer 15 from the beam 13 through the thinned silicon oxide layer, and therefore prevent the occurrence of a deformation or warpage of the beam.

It is preferred that first and second regions are defined on the top surface of each of the beams at both sides of a center line extending in the length direction of the beam through a center of a width of the beam, and wherein wiring patterns formed in the first and second regions by the doped semiconductor layers are symmetric with respect to the center line. In this case, since an amount of stress induced in the first region of the beam is substantially equal to the amount of stress induced in the second region of the beam, it is possible to prevent a situation that the beam is twisted, and the weight is inclined regardless of the presence or absence of acceleration. As a result, it is possible to further reduce the offset voltage of the acceleration sensor.

These and still other objects and advantages of the present invention will become more apparent from detail description of preferred embodiments explained below, referring to the attached drawings.

### BRIEF EXPLANATION OF THE ATTACHED DRAWINGS

FIG. 1 is a perspective view of a semiconductor multi-axial acceleration sensor, from which a part of a frame was removed, according to a first embodiment of the present invention;
FIG. 2 is a top view of the acceleration sensor;
FIG. 3 is schematic plan view showing positions of resistor elements of the acceleration sensor;
FIG. 4 is a circuit diagram of bridge circuits of the acceleration sensor;
FIG. 5 is a circuit diagram for explaining an operation of the acceleration sensor;
FIG. 6 shows an example of a wiring layout of the acceleration sensor;
FIG. 7 is a schematic cross-sectional view illustrating a positional displacement of a weight of the acceleration sensor;
FIG. 8 is a schematic cross-sectional view illustrating another positional displacement of the weight of the acceleration sensor;
FIG. 9 is a flat view of a semiconductor multi-axial acceleration sensor according to a second embodiment of the present invention;
FIG. 10 is a flat view of a semiconductor multi-axial acceleration sensor according to a third embodiment of the present invention;
FIG. 11 is a flat view of a semiconductor multi-axial acceleration sensor according to a fourth embodiment of the present invention;
FIG. 12 is a schematic cross-sectional view of a beam with doped semiconductor layers:
FIGS.13A to 13F show a method of forming the doped semiconductor layers of FIG. 12 in the beam;
FIG. 14 is a schematic cross-sectional view of another beam with doped semiconductor layers:
FIGS.15A to 15F show a method of forming the doped semiconductor layers of FIG. 14 in the beam; and
FIG. 16 is a perspective view of a conventional semiconductor multi-axial acceleration sensor, from which parts of a weight and a frame were removed.

### DETAIL DESCRIPTION OF THE PREFERRED EMBODIMENTS OF THE INVENTION

According to the following preferred embodiments, semiconductor acceleration sensors of the present invention are explained in detail. However, needless to say, the present invention is not limited to these embodiments.

### (First Embodiment)

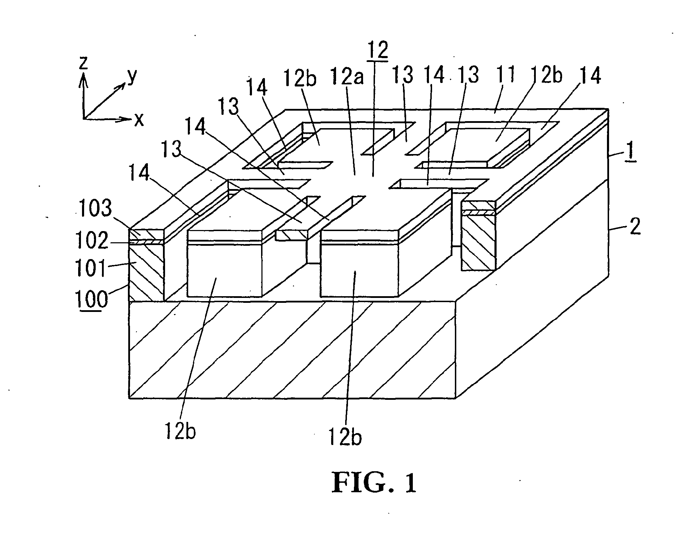

In a semiconductor multi-axial acceleration sensor of this embodiment, as shown in FIG. 1, a sensor body **1** is formed by use of a SOI substrate **100** having an embedded oxide layer **102** such as silicon oxide as an intermediate layer, and fixed to a glass cover 2 by anodic bonding. The SOI substrate **100** is composed of a base substrate **101** of silicon, an n-type silicon layer (silicon active layer) **103** having a smaller thickness than the base substrate, and the embedded oxide layer **102** provided therebetween as an insulating layer. It is preferred that a thickness of the base substrate **101** is in a range of 400 to 600 µm, thickness of the embedded oxide film **102** is in a range of 0.3 to 1.5 µm, and the thickness of the silicon layer **103** is in a range of 4 to 6 µm.

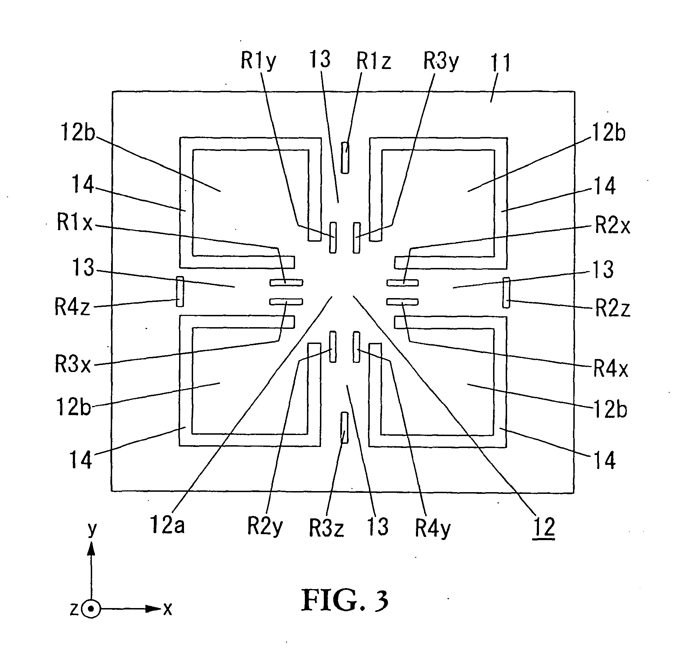

As shown in FIGS. 1 and 3, this sensor body **1** has a rectangular frame **11,** a weight **12,** and two pairs of beams **13** each having a smaller thickness than the frame. The weight **12** is supported in the frame **11** via those beams **13**. The rectangular frame **11**, weight **12** and the beams **13** are integrally molded by the SOI substrate. In addition, the sensor body **1** is formed such that a thickness of the base substrate **101** of the weight **12** is smaller than the thickness of the base substrate of the frame **11.** Therefore, when the bottom surface of the rectangular frame **11** is fixed to the glass cover **2**, the weight **12** is spaced away from the glass cover by a required distance. Thus, by the formation of clearances between the frame **11** and the weight **12**, and between the glass cover **2** and the weight **12**, the weight **12** is allowed to make a positional displacement when the acceleration sensor receives acceleration.

The weight **12** is formed with a center weight **12a** of a rectangular solid having a substantially square top, to each side of which one end of each of the beams **13** is connected, and four sub weights **12b** projecting from four corners of the center weight **12a.** Each of the sub weights **12b** is of a rectangular solid having a substantially square top, and spaced from the frame **11** and the beams **13** by a slit **14** except that a corner of the sub weight **12b** is connected to the corner of the center weight **12a.** Each of the beams **13** is composed of the n-type silicon layer **103** and an insulating layer (not shown) of silicon oxide formed on the n-type silicon layer. One pair of the beams **13** extends in an orthogonal direction to the other pair of the beams.

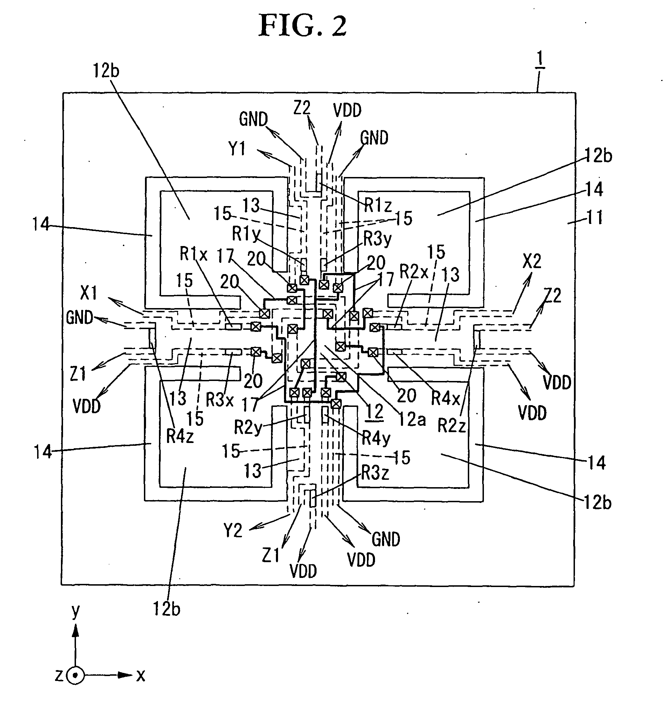

In this embodiment, a Z-axis is defined in a thickness direction of the sensor body **1.** Y and X axes different from each other by 90 degrees are defined on a horizontal top plane of the sensor body **1,** as shown in FIG. 2. Therefore, to support the weight **12**, one pair of the beams extends in the X-axis direction, and the other pair of the beams extends in the Y-axis direction.

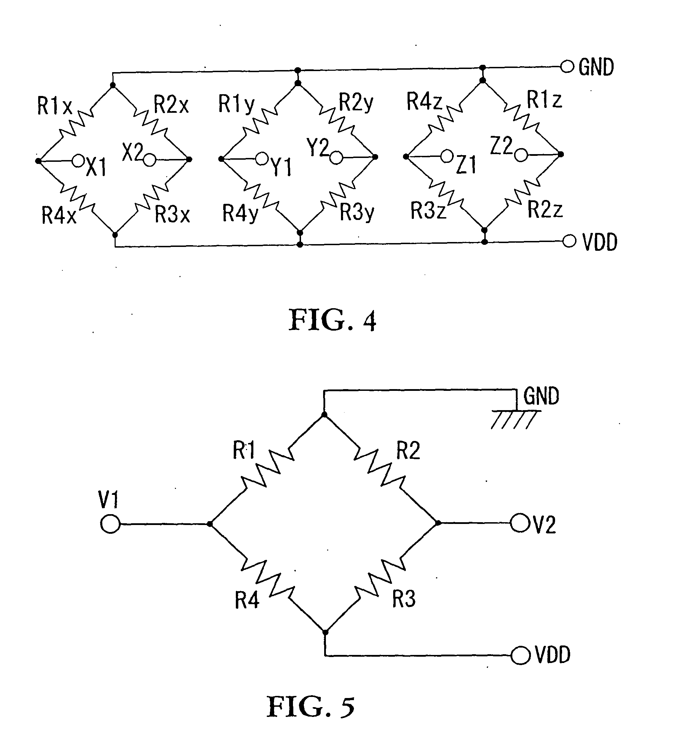

On one (left beams shown in FIG. 2 or 3) of the beams **13** extending in the X-axis direction, resistor elements **R1x, R3x** are positioned in the vicinity of the center weight **12a,** and a resistor element **R4z** is positioned in the vicinity of the frame **11**. Similarly, on the other one (right beam shown in FIG. 2 or 3) of the beams 13 extending in the X-axis direction, resistor elements **R2x**, **R4x** are positioned in the vicinity of the center weight **12a,** and a resistor element **R2z** is positioned in the vicinity of the frame **11.** These four resistor elements **(R1x, R2x, R3x, R4x)** are used to detect the acceleration in the X-axis direction, and arranged such that a length direction of each of the resistor elements is in agreement with the extending direction of the beam **13**. In addition, these resistor elements are electrically connected to form a bridge circuit shown at the left side of FIG. 4. Thus, it is preferred that the resistor elements **(R1x, R2x, R3x, R4x)** are formed on required regions of the beams **13,** at each of which a maximum stress are generated when the acceleration sensor receives acceleration in the X-axis direction.

On one (upper beams shown in FIG. 2 or 3) of the beams **13** extending in the Y-axis direction, resistor elements **R1y, R3y** are positioned in the vicinity of the center weight **12a,** and a resistor element **R1z** is positioned in the vicinity of the frame **11.** Similarly, on the other one (lower beam shown in FIG. 2 or 3) of the beams **13** extending in the Y-axis direction, resistor elements **R2y, R4y** are positioned in the vicinity of the center weight **12a,** and a resistor element **R3z** is positioned in the vicinity of the frame **11.** These four resistor elements **(R1y, R2y, R3y, R4y)** are used to detect the acceleration in the Y-axis direction, and arranged such that a length direction of each of the resistor elements is in agreement with the extending direction of the beam **13**. In addition, these resistor elements are electrically connected to form a bridge circuit shown at the center of FIG. 4. Thus, it is preferred that the resistor elements **(R1y, R2y, R3y, R4y)** are formed on required regions of the beams **13,** at each of which a maximum stress are generated when the acceleration sensor receives acceleration in the Y-axis direction.

On the other hand, the four resistor elements **(R1z, R2z, R3z, R4z)** are positioned in the vicinity of the frame **11** on the beams **13** such that a length direction of each of the resistor elements **(R1z, R3z)** is in agreement with the extending direction of the corresponding beam, i.e., the Y-axis direction, and a width direction of each of the resistor elements (**R2z**, **R4z**) is in agreement with the extending direction of the corresponding beam, i.e., the X-axis direction. These resistor elements **(R1z, R2z, R3z, R4z)** are used to detect the acceleration in the Z-axis direction. In addition, these resistor elements are electrically connected to form a bridge circuit shown at the right side of FIG. 4. Thus, it is preferred that the resistor elements **(R1z, R2z, R3z, R4z)** are formed on required regions of the beams **13,** at each of which a maximum stress are generated when the acceleration sensor receives acceleration in the Z-axis direction.

The electrical resistivity of the resistor element **(R1x∼R4x, R1y∼ R4y, R1z∼R4z)** changes in accordance with strain induced in the beam **13** by a positional displacement of the weight **12** against the frame **11** when the acceleration sensor receives acceleration (piezoresistive effect). In addition, each of the resistor elements is electrically connected to a pad formed at a required position on the frame **11.** In this embodiment, all of wirings electrically connected to the resistor elements on the beams **13** are formed by doped semiconductor layers **15** formed in top surfaces of the beams **13** at a required depth.

In this case, since a difference of thermal expansion coefficient between the doped semiconductor layer **15** and the semiconductor material of the beam **13** is very small, it is possible to remarkably reduce the influence of undesirable thermal stress caused in the beam by the difference of thermal expansion coefficient on the detection accuracy of acceleration, as compared with the case that the acceleration sensor has a bimetal structure formed by the semiconductor material of the beam and a metal layer wiring formed on the beam. It is preferred that a depth of the doped semiconductor layer **15** from the top surface of each of the beams **13** is substantially half of a thickness of the beam, and a doping concentration of the doped semiconductor layer is within a range of 10¹⁸/cm³ to 10²¹/cm³. As the doping concentration increases, the electrical resistivity of the doped semiconductor layer becomes smaller to thereby reduce the amount of heat generation and electric power consumption of the sensor body **1.**

When forming the wiring(s) of the doped semiconductor layer **15**, it is preferred that the resistor element(s) and the wiring(s) of the doped semiconductor layer formed on each pair of the beams have electrical resistances determined such that a total amount of heat generated by the resistor element(s) and the wiring(s) of the doped semiconductor layer on one of the pair of beams are substantially equal to the total amount of heat generated by them on the other beam.

That is, since a part of electric power supplied to the sensor body **1** is lost as Joule heat when electric current flows in the wiring, a temperature of the doped semiconductor layer **15** in the beam **13** increases. When an insulating film for protection such as silicon oxide is formed on the top surface of the beam, there is a fear that a radiation of heat generated by the doped semiconductor layer **15** from the beam **13** is interfered with the insulating film having a low thermal conductivity, so that a deformation or warpage of the beam **13** occurs. In this case, it is preferred a thermal oxide film is formed as the insulating film on the top surface of each of the beams such that a first thickness of the insulating film on the doped semiconductor layer **15** is smaller than a second thickness of the insulating film on a wiring free region of the top surface of the beam **13.** As an example, the first thickness is approximately 4000 Å, and the second thickness is approximately 7000 Å.

For example, the thermal oxide film having the first and second thicknesses can be obtained on the beam by the following method. That is, a silicon oxide film formed on the entire top surface of the SOI substrate **100** is patterned, so that exposed surfaces of the beams are used as wiring regions for forming the doped semiconductor layers **15**. After the doped semiconductor layers are formed by use of the patterned silicon oxide film as a mask, an additional silicon oxide film is formed on the entire surface of the SOI substrate with the doped semiconductor layer and the patterned insulating film by thermal oxidation. The doped semiconductor layer **15** and the resistor element can be formed by ion implantation of a p-type impurity such as boron. Alternatively, after a predeposition of the p-type impurity, a drive-in step may be performed. In this embodiment, since the silicon layer **103** is made of the n-type semiconductor material, the conductivity type of the resistor element and the doped semiconductor layer is p-type. On the contrary, when the silicon layer **103** is made of a p-type semiconductor material, the conductivity type of the resistor element and the doped semiconductor layer is n-type.

By the way, when most of wirings connected to the resistor elements positioned around the center weight **12a** are formed on the frame **11,** there may be an inconvenience that nonuniformity of wiring resistance in the bridge circuit increases due to an extended length of the wirings, and also the sensor body **1** increases in size. The occurrence of such an inconvenience will increase as larger the number of the bridge circuits and/or longer the beam length. In such a case, it is preferred that at least a part of the wirings for the resistor elements positioned around the center weight **12a** are formed on the center weight **12a**.

For example, when two wirings cross each other on the center weight **12a**, it is preferred that one of the wirings is formed by the doped semiconductor layer **15** and the other one is formed by a metal layer **17**, and an insulating layer such as an silicon oxide film formed on the silicon layer **103** is provided at the intersection of these two wirings to electrically insulate the doped semiconductor layer **15** from the metal layer **17**. Alternatively, a multilayer of the silicon oxide film and a silicon nitride film may be used as the insulating film.

In FIG. 2, the numeral **20** designates a contact portion, at which the doped semiconductor layer **15** is electrically connected with the metal layer **17**. That is, a contact hole is formed in the insulating film, one end of the metal layer wiring is embedded in the contact hole to obtain the electrical connection between the doped semiconductor layer **15** and the metal layer **17**. Each of the doped semiconductor layers **15** formed in the center weight **12a** is of an L-shape configuration. The doped semiconductor layers **15** are formed in the center weight **12a** so as not to cross each other. Most of the wirings on the frame **11** can be formed by the metal layer (not shown).

As described above, since the semiconductor multi-axial acceleration sensor has the two or three bridge circuits, a total number of pads formed on the frame **11** increases. This may narrows a degree of freedom of wiring design, and enlarges the size of the sensor body **1.** In this embodiment, as shown in FIG. **4****,** only two pads are used as common input terminals for the three bridge circuits to reduce the total number of the pads formed on the frame **11.** In other words, the three bridge circuits are connected in parallel. As a result, the total number of the pads to be formed on the frame **11** in this embodiment is eight.

In FIG. 4, **"X1"** and **"X2"** designate two output terminals of the bridge circuit used to detect the acceleration in the X-axis direction. **"Y1"** and **"Y2"** designate two output terminals of the bridge circuit used to detect the acceleration in the Y-axis direction. **"Z1"** and **"Z2"** designate two output terminals of the bridge circuit used to detect the acceleration in the Z-axis direction. "VDD" and "GND" designate the commonly input terminals for the three bridge circuits. The pads and the wirings formed on the frame **11** are not shown in FIG. 2.

The pad to be connected with the resistor element through the wiring is indicated by the arrow in FIG. 2. For example, the resistor element **"R1x"** formed on the beam **13** is connected to the pad (not shown) corresponding to the output terminal **"X1"** through the wiring of the doped semiconductor layer **15** formed in the beam **13.** An external power supply (not shown) is connected between the input terminals "**VDD**" and **"GND".** The input terminal **"VDD"** is connected to a high-voltage side of the power supply, and the input terminal **"GND"** is connected to a low-voltage side of the power supply (i.e., ground side). Thus, by using the pad arrangement described above, it is possible to reduce the total number of the pads to be formed on the frame **11,** increase the degree of freedom of wiring design, and readily downside the sensor body **1,** as compared with the case of forming the pads for input terminals every bridge circuit on the frame **11.**

By the way, in the acceleration sensor of this embodiment with the doped semiconductor layer **15** formed as the wiring on each of the beams **13**, the electrical resistance of the wiring extending between the resistor elements increases due to a relatively large specific resistance of the doped semiconductor layer, so that there is a tendency that the offset voltage is enlarged as the length of the wiring extending between the resistor elements becomes longer. For example, in the bridge circuit shown in FIG. 5, the offset voltage is a voltage "**v**"(=v1―v2) output from the acceleration sensor when the acceleration sensor does not receive acceleration.

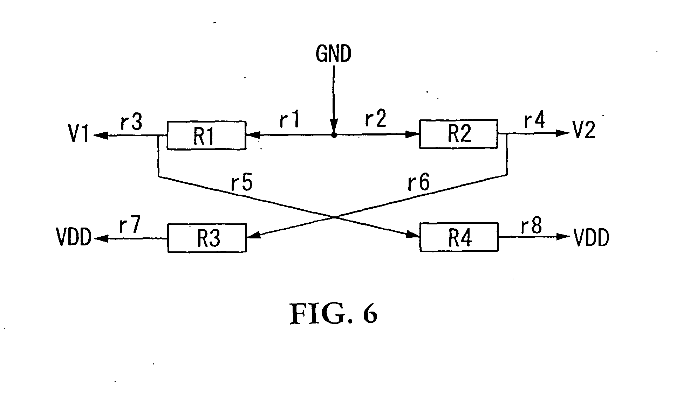

In this embodiment, to reduce the offset voltage, the electrical resistance of each of the wirings is adequately determined according to the following manner. That is, as shown in FIG. 6, a resistance value **(r1)** of the wiring extending between the resistor element **R1** and the input terminal **"GND"** is equal to the resistance value **(r2)** of the wiring extending between the resistor element **R2** and the input terminal "GND". A resistance value **(r3)** of the wiring extending between the resistor element **R1** and the output terminal **"V1"** is equal to the resistance value **(r4)** of the wiring extending between the resistor element **R2** and the output terminal **"V2".** A resistance value **(r5)** of the wiring extending between the resistor elements **R1** and **R4** is equal to the resistance value **(r6)** of the wiring extending between the resistor elements **R2** and **R3.** A resistance value (**r7**) of the wiring extending between the resistor element **R3** and the input terminal "**VDD**" is equal to the resistance value (**r8**) of the wiring extending between the resistor element **R4** and the input terminal "**VDD**". Thus, it is preferred to use a wiring layout suitable for reducing the offset voltage, i.e., thermal hysteresis within a working temperature of the acceleration sensor.

In this embodiment, with respect to the bridge circuit for detecting the acceleration in the X-axis direction, electrical resistances of the resistor elements **(R1x** to **R4x)** and the wirings of the related doped semiconductor layer are determined such that a total amount of heat generated by the resistor elements **(R1x, R3x)** and the wiring of the doped semiconductor layer **15 on** one of the pair of beams is substantially equal to the amount of heat generated by the resistor elements **(R2x, R4x)** and the wiring of the doped semiconductor layer on the other beam. Similarly, with respect to the bridge circuit for detecting the acceleration in the Y-axis direction, electrical resistances of the resistor elements **(R1y** to **R4y)** and the wirings of related the doped semiconductor layer **15** are determined such that a total amount of heat generated by the resistor elements (**R1y**, **R3y**) and the wiring of the doped semiconductor layer on one of the pair of beams is substantially equal to the amount of heat generated by the resistor elements (**R2y**, **R4y**) and the wiring of the doped semiconductor layer on the other beam.

Moreover, with respect to the bridge circuit for detecting the acceleration in the Z-axis direction, electrical resistances of the resistor elements **(R1z** to **R4z)** and the wirings of the related doped semiconductor layer **15** are determined such that a total amount of heat generated by the resistor element **R1z** and the wiring of the doped semiconductor layer on one of the pair of beams is substantially equal to the amount of heat generated by the resistor element **R3z** and the wiring of the doped semiconductor layer on the other beam, and a total amount of heat generated by the resistor element **R2z** and the wiring of the doped semiconductor layer on one of another pair of beams is substantially equal to the amount of heat generated by the resistor element **R4z** and the wiring of the doped semiconductor layer on the other beam. By using the above-described wiring design, it is possible to reduce the offset voltage with respect to each of the bridge circuits. It is preferred that the electrical resistance of the doped semiconductor layer **15** connected to one end of each of the resistor elements **(R1z** to **R4z)** is substantially equal to the electrical resistance of the doped semiconductor layer **15** connected to the opposite end of each of the resistor elements **(R1z** to **R4z).**

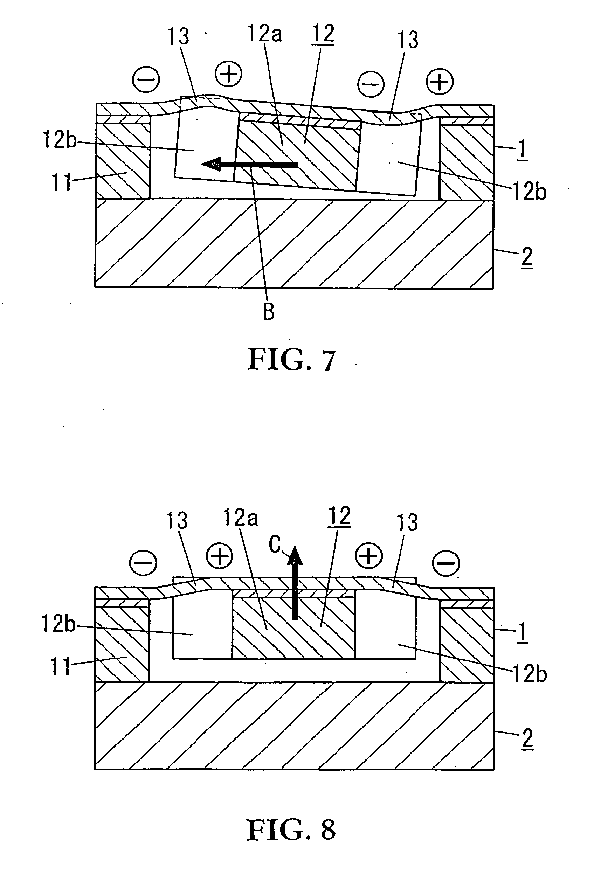

Next, the principle of detecting acceleration of the semiconductor multi-axial acceleration sensor of the present invention is briefly explained, referring to FIGS. 5 and 7. When the bridge circuit of FIG. 5 is regarded as the bridge circuit for detecting the acceleration in the X-axis direction, the resistor elements **(R1** to **R4)** respectively correspond to the resistor elements **(R1x** to **R4x),** and the output terminals **"V1"** and **"V2"** respectively correspond to the output terminals **"X1"** and **"X2".**

As an example, when the acceleration sensor receives an external force (i.e., acceleration) including an acceleration component in the X-axis direction, a positional displacement of the weight **12** against the frame **11** happens, as shown in FIG. 7. Deformations of the beams **13** are caused by the positional displacement of the weight **12** to change the electrical resistances of the resistor elements **(R1** to **R4)** formed on the beams **13** (piezoresistive effect). In FIG. 7, the arrow **"B"** shows a direction of the positional displacement of the weight **12.** In this case, the resistor elements **(R1, R3)** receive tensile stresses, and the resistor elements **(R2, R4)** receive compression stresses. In FIG. 7, the mark "**+**" designates that the resistor element formed at the region corresponding to the mark receives the tensile stress, and the mark "―" designates that the resistor element formed at the region corresponding to the mark receives the compression stress.

In general, when the resistor element receives the tensile stress, the electrical resistance (electrical resistivity) increases. On the contrary, when the resistor element receives the compression stress, the electrical resistance decreases. Therefore, in the above case, the electrical resistances of the resistor elements **(R1, R3)** increase, and the electrical resistances of the resistor elements **(R2, R4)** decrease, so that a voltage difference is generated between the output terminals **(V1, V2).** When voltage values of the output terminals **"V1"** and **"V2"** are respectively represented as **"v1"** and **"v2",** a output voltage "v" of the bridge circuit is equal to **"v1"―"v2".** Thus, the acceleration component of the X-axis direction can be determined by detecting the changes in electrical resistance of the resistor elements **(R1** to **R4).** When the acceleration sensor receives the acceleration only in the X-axis direction, no voltage difference is generated between the output terminals **(V1, V2)** with regard to each of the bridge circuits for detecting the acceleration components in the Y- and Z-axis directions. Since the principle of detecting acceleration in a case that the acceleration sensor receives an external force (i.e., acceleration) including an acceleration component in the Y-axis direction is substantially equal to the above-described case of receiving the acceleration component in the X-axis direction, the duplicate explanation will be omitted.

On the other hand, when the bridge circuit of FIG. 5 is regarded as the bridge circuit for detecting the acceleration in the Z-axis direction, the resistor elements **(R1, R2, R3, R4)** respectively correspond to the resistor elements **(R4z, R1z, R2z, R3z),** and the output terminals **"V1"** and **"V2"** respectively correspond to the output terminals **"Z1"** and **"Z2".**

When the acceleration sensor receives an external force (i.e., acceleration) including an acceleration component in the Z-axis direction, a positional displacement of the weight **12** against the frame 11 happens, as shown in FIG. 8. Deformations of the beams **13** are caused by the positional displacement of the weight **12** to change the electrical resistances of the resistor elements **(R1** to **R4)** formed on the beams. In FIG. 8, the arrow "**C**" shows a direction of the positional displacement of the weight **12.** In this case, all of the resistor elements **(R1** to **R4)** receive the tensile stresses. However, since electric current flows in each of the resistor elements **(R1z, R3z)** along the length direction of the beam **13**, and electric current flows in each of the resistor elements **(R2z, R4z)** along the width direction of the **beam 13,** a voltage difference is generated between the output terminals **(V1, V2).** When voltage values of the output terminals **"V1"** and **"V2"** are respectively represented as **"V1"** and **"v2",** a output voltage **"v"** of the bridge circuit is equal to **"v1 "―"v2".** Thus, the acceleration component of the Z-axis direction can be determined by detecting the changes in electrical resistance of the resistor elements **(R1** to **R4).**

The weight **12** integrally formed with the frame **11** of the acceleration sensor of the present invention can be manufactured by the following method. That is, a first etching step is performed vertically from the bottom side of the SOI substrate **100** by use of a dry etching apparatus of inductively coupled plasma type to remove regions corresponding to the slits **14** and the beams **13** from the SOI substrate until the etching reaches the embedded oxide film **102**. Then, a second etching step is performed vertically from the top side of the SOI substrate **100** by means of dry etching or wet etching to remove regions of corresponding to the slits **14** from the SOI substrate **100** until the etching reaches the embedded oxide film **102**. Next, a third etching step is performed to remove the embedded oxide film **102** of the regions of corresponding to the slits **14** and the beams **13** from the SOI substrate by means of dry etching or wet etching.

According to this method, each of the beams **13** is composed of the silicon layer **103** and the insulating layer formed thereon, and the embedded oxide layer **102** can be used as an etching stopper in the first and second etching steps. Therefore, it is possible to readily control the thickness of the beam **13** with accuracy during the etching step, and improve the production yields. As a result, a cost reduction can be achieved.

In addition, as compared with the case of forming the weight **12** by anisotropic etching using an alkali solution such as KOH, it is possible to reduce the clearance between the weight **12** and frame **11,** downsize the sensor body **1,** and thereby provide the acceleration sensor having a refined structure of the present invention.

### (Second Embodiment)

A semiconductor multi-axial acceleration sensor of this embodiment is substantially the same as that of the first embodiment except for the following features. Therefore, no duplicate explanation is deemed to be necessary.

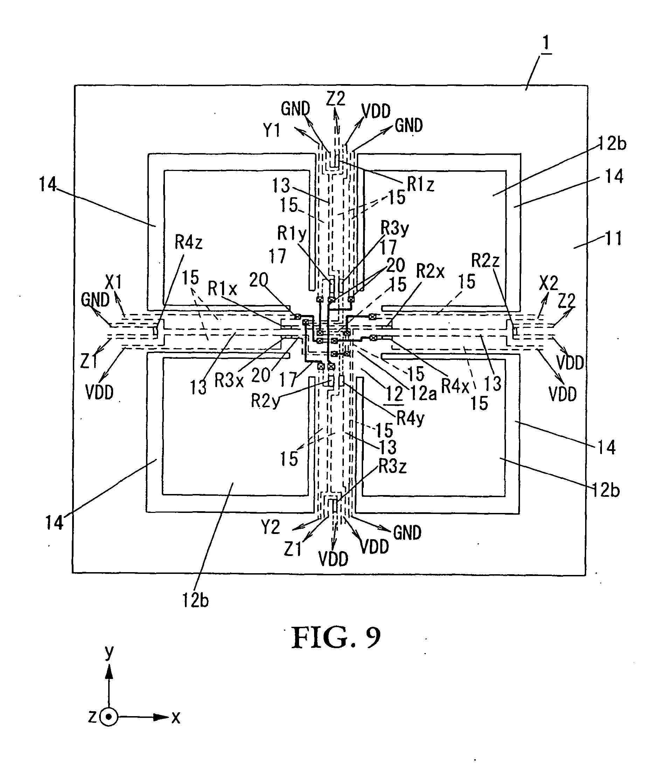

The acceleration sensor of this embodiment has a wiring layout different from the first embodiment. That is, as shown in FIG. 9, with respect to pair of beams **13** extending in the X-axis direction, wiring patterns of doped semiconductor layers **15** formed on one of the beams **13** and the wiring patterns of the doped semiconductor layers **15** formed on the other beam **13** are symmetric with respect to a vertical center line extending in the Y-axis direction through a center of width of each of the beams. Similarly, with respect to pair of beams **13** extending in the Y-axis direction, wiring patterns of doped semiconductor layers **15** formed on one of the beams **13** and the wiring patterns of the doped semiconductor layers **15** formed on the other beam **13** are symmetric with respect to a horizontal center line extending in the X-axis direction through a center of width of each of the beams. According to the acceleration sensor having the above features, it is possible to further reduce the offset voltage output from each of the bridge circuits.

In this embodiment, each of the doped semiconductor layers **15** is formed on the beam **13** to have a relative large width under a condition that an interval between adjacent wirings of the doped semiconductor layers **15** is sufficient to maintain the electrical insulation therebetween. That is, a total area of the wirings formed in the top surface of each of the beams **13** by the doped semiconductor layers **15** is larger than the total area of wiring free regions of the top surface thereof. In this case, since the thermal oxide film can be readily formed on each of the beams such that a thickness of the thermal oxide layer on the doped semiconductor layer **15** is smaller than the thickness of the thermal oxide layer on the wiring free region, it is effective to achieve an improvement of heat radiation performance of the beams **13**.

### (Third Embodiment)

A semiconductor multi-axial acceleration sensor of this embodiment is substantially the same as that of the second embodiment except for the following features. Therefore, no duplicate explanation is deemed to be necessary.

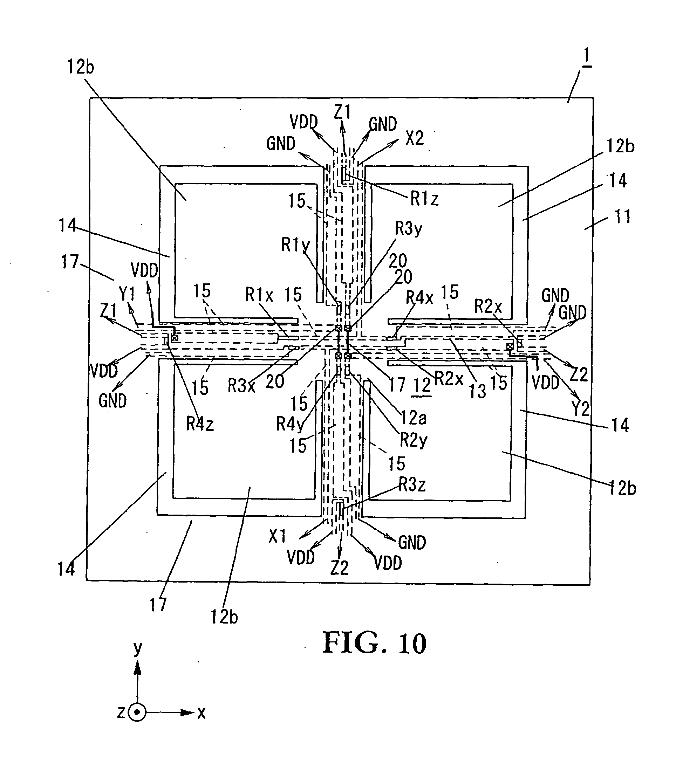

The acceleration sensor of this embodiment has a wiring layout different from the second embodiment. That is, as shown in FIG. 10, with respect to pair of beams **13** extending in the X-axis direction, wiring patterns of doped semiconductor layers **15** formed on one of the beams **13** and the wiring patterns of the doped semiconductor layers **15** formed on the other beam **13** are rotationally symmetric with respect to a center point of the top surface of the center weight **12a** by 180 degrees. Similarly, with respect to pair of beams **13** extending in the Y-axis direction, wiring patterns of doped semiconductor layers **15** formed on one of the beams **13** and the wiring patterns of the doped semiconductor layers **15** formed on the other beam **13** are rotationally symmetric with respect to a center point of the top surface of the center weight **12a** by 180 degrees. According to the acceleration sensor having the above features, it is possible to further reduce the offset voltage output from each of the bridge circuits and improve heat radiation performance of the beams **13**.

### (Fourth Embodiment)

A semiconductor multi-axial acceleration sensor of this embodiment is substantially the same as that of the first embodiment except for the following features. Therefore, no duplicate explanation is deemed to be necessary.

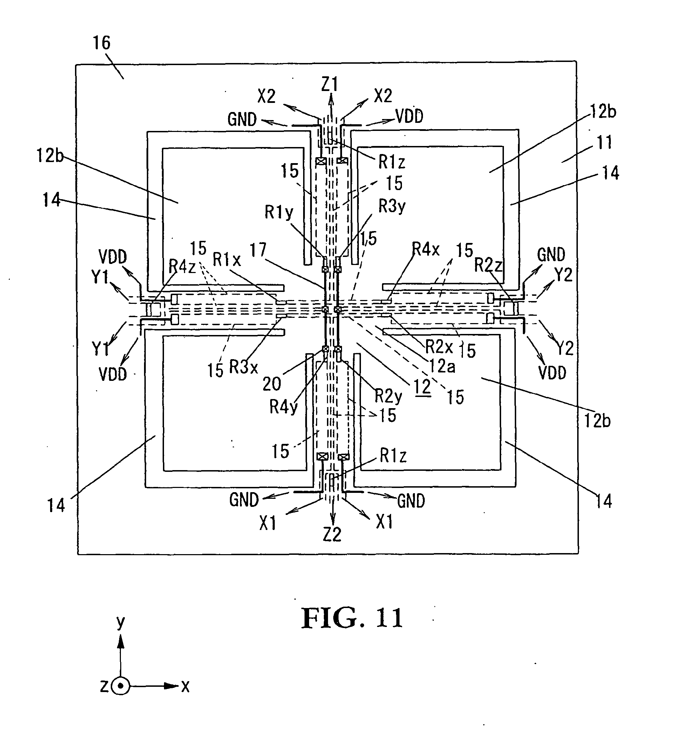

The acceleration sensor of this embodiment has a wiring layout different from the second embodiment. That is, as shown in FIG. 11, first and second regions are defined on the top surface of each of the beams **13** at both sides of a center line extending in the length direction of the beam through a center of a width of the beam, and the wiring patterns formed in the first and second regions by the doped semiconductor layers **15** are symmetric with respect to the center line.

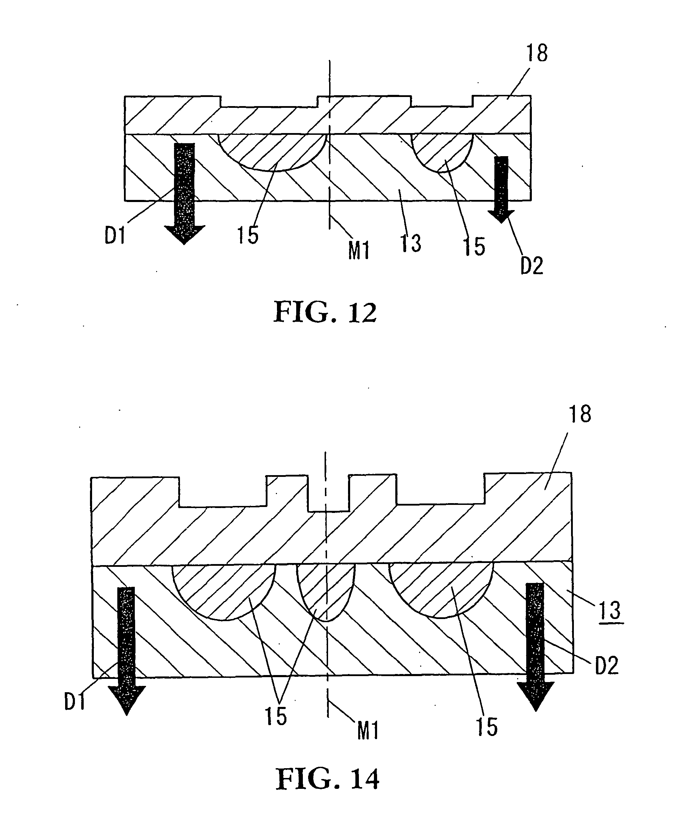

For example, as shown in FIG. 12, there is a case that the doped semiconductor layer **15** formed on the first region (left side of FIG. 12) of the beam **13** and the doped semiconductor layer formed on the second region (right side of FIG. 12) of the beam **13** are not symmetric with respect to the center line **M1.** In this case, the doped semiconductor layer **15** of the first region has a larger width than the doped semiconductor layer of the second region, and is formed close to the center line **M1.**

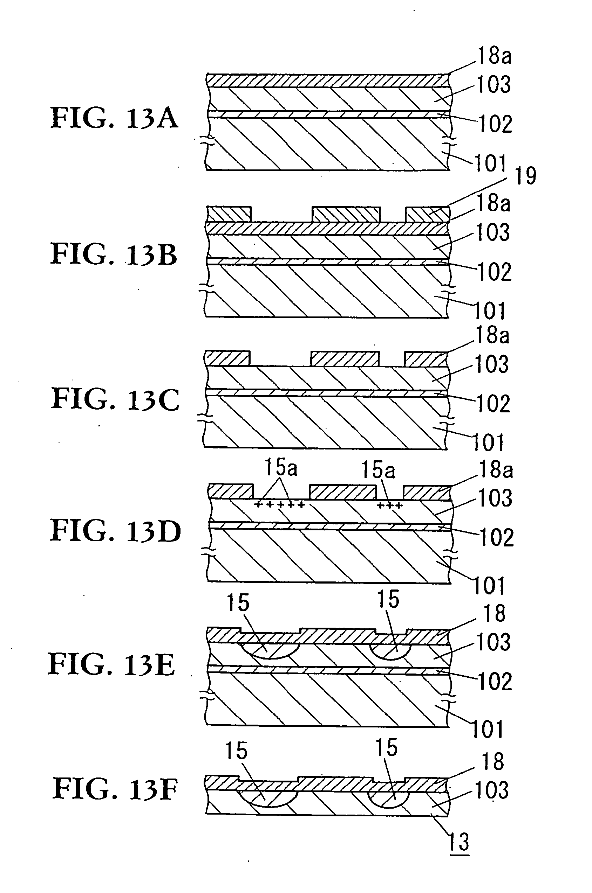

Referring to FIG. 13A to FIG. 13F, a method of forming the beam **13** shown in FIG. 12 is briefly explained. As the SOI substrate **100**, for example, it is possible to use a SOI wafer composed of the base substrate **101** having the thickness of 400 µm, the embedded oxide film **102** having the thickness of 0.5 µm, and the silicon layer **103** having the thickness of 5 µm).

First, a silicon oxide film **18a** having a first thickness (e.g., 6000 Å) is formed on a top surface of the SOI wafer by pyrogenic oxidation, as shown in FIG. 13A. Then, as shown in FIG. 13B, a patterned resist layer **19** is formed on the silicon oxide film **18a** by use of a photolithography technique. After a hydrofluoric-acid etching of a part of the silicon oxide film **18a** is performed by using the resist layer **19** as the mask, the resist layer is removed, as shown in FIG. 13C. Next, as shown in FIG. 13D, a p-type impurity **15a** (e.g., boron) is diffused into the silicon layer **103** in a diffusion furnace by use of the patterned silicon oxide film **18a** as the mask to obtain a doped semiconductor layer **15**. In addition, as shown in FIG. 13E, an additional silicon oxide film having a second thickness (e.g., 4000Å) is formed on the exposed surface of silicon layer **103** and the patterned silicon oxide film **18a** by thermal oxidation.

Thus, the insulating film **18** is provided with the silicon oxide film 18a having the first thickness and the additional silicon oxide film having the second thickness subsequently formed. A thickness of this insulating film **18** is approximately 7000 Å. On the other hand, the additional silicon oxide film formed on the exposed surface of silicon layer **103**, i.e., the doped semiconductor layer **15** by the thermal oxidation has a thickness of approximately 4000 Å. As process conditions for the above-described diffusion step, for example, the diffusion temperature is 1100 °C, and the diffusion time is 30 minutes. A mixture gas of steam and oxygen is filled in the diffusion furnace.

After a contact hole is formed in the insulating film **18**, and a required wiring of a metal layer is formed on the insulating film, the beam **13** shown in FIG. 13F can be obtained by performing an etching step vertically from the bottom side of the SOI substrate **100** by use of a dry etching apparatus of inductively coupled plasma type to remove a region corresponding to the beam **13** from the SOI substrate until the etching reaches the embedded oxide film **102**, and then a subsequent etching step to remove the embedded oxide film **102** of the region of corresponding to the beam **13** from the SOI substrate by means of dry etching or wet etching.

In the thus obtained beam **13** shown in FIG. 12 the insulating films **18** formed on the first and second region of the beam **13** are not symmetric with respect to the center line **M1.** Due to differences in an amount of stress of the insulating film **18** and the amount of stress induced in the doped semiconductor layer **15** by crystal distortions between the first and second regions of the beam **13**, two different stresses shown by the arrows "**D1**" and **"D2"** in FIG. 12 occurs in the beam **13,** so that there is a fear that the beam **13** is twisted, and the weight **12** is inclined regardless of the presence or absence of acceleration. In addition, when the acceleration sensor with the cover **2** and the sensor body **1** having the beams described above is adhered to a package having a thermal expansion coefficient different from silicon by die bonding with use of an adhesive such as a silicone resin or an epoxy resin, undesirable stress is transferred from the package to the beam at an elevated temperature, so that there is a fear that the inclination of the weight **12** further increases to cause a larger fluctuation of the offset voltage.

As described above, in the semiconductor multi-axial acceleration sensor of this embodiment, the doped semiconductor layer **15** and the insulating layer **18** formed on the first region (left side of FIG. 14) of the beam **13** and the doped semiconductor layer and the insulating layer **18** formed on the second region (right side of FIG. 14) of the same beam **13** are symmetric with respect to the center line **M1**.

That is, as shown in FIG. 14, the doped semiconductor layer **15** of the first region has the same width and thickness as the doped semiconductor layer of the second region. The doped semiconductor layers **15** on the first and second regions are spaced from the center line **M1** by an equal distance. In addition, the doped semiconductor layer **15** formed on the center line **M1** are equally divided into the first and second regions by the center line.

In the doped semiconductor layer **15** formed by doping the impurity into the silicon layer **103**, an internal stress is caused by crystal lattice distortions. When a depth of the doped semiconductor layer **15** from the top surface of the beam **13** is relatively small, a difference in internal stress between the doped semiconductor layer **13** at the vicinity of the top surface of the beam and the silicon layer **103** positioned at the vicinity of the bottom surface of the beam **13** increases, so that a resultant strain (stress) may wield an undesirable influence over the detection accuracy of acceleration. In the present embodiment, stress relaxation is achieved by determining the depth of the doped semiconductor layer **15** so as to be substantially half of a thickness of the beam **13**. When the doped semiconductor layer **15** is formed to have a sufficient depth from the top surface of the beam **13**, it is also possible to achieve a reduction in wiring resistance.

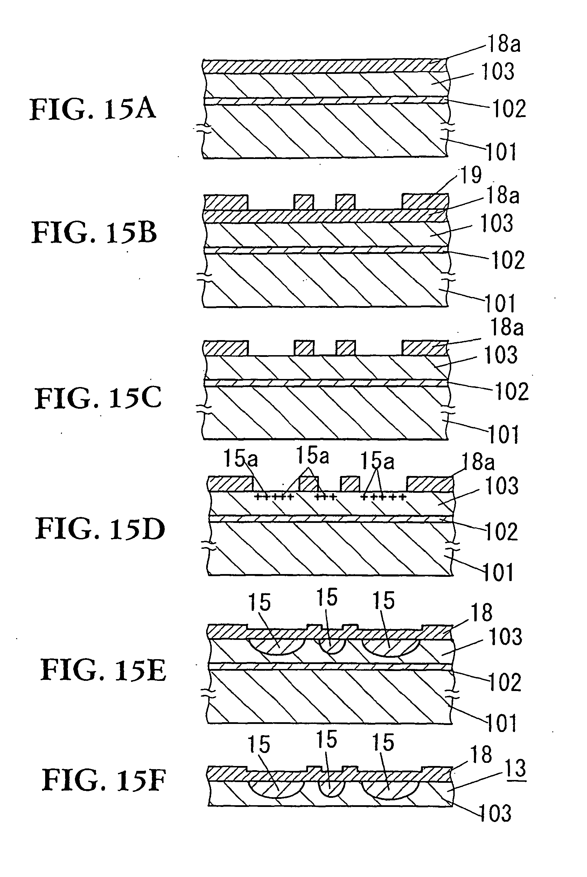

As shown in FIG. 15A to FIG. 15F, the beam **13** shown in FIG. 14 can be formed according to a substantially same method explained above referring to FIGS.13A to 13F. The use of the thus obtained beam **13** shown in FIG. 14 provides one of effective methods of preventing a situation that the beam is twisted, and the weight is inclined regardless of the presence or absence of acceleration, and a situation that the fluctuation of the offset voltage is increased over the working temperature range of the acceleration sensor by undesirable stress transferred from the package to the beam. As a result, it is possible to achieve further improvements of detection accuracy of acceleration and operational reliability of the semiconductor multi-axial acceleration sensor according to the present invention.

In the above embodiments, the SOI wafer was used to form the sensor body **1**. Alternatively, an epitaxial wafer such as silicon wafer may be used for the sensor body **1**. In addition, Pyrex® was used as the cover **2** in the above embodiments. However, the cover material is not limited to it. It is possible to use the cover **2** made of a material, to which the sensor body **1** can be fixed by anodic bonding or eutectic bonding. For example, the cover **2** may be made of silicon.

In the above embodiments, the semiconductor multi-axial acceleration sensors for detecting acceleration in three axial directions (i.e., X-, Y-, and Z-axes) were explained. However, needless to say, the technical thought of the present invention is available in a semiconductor multi-axial acceleration sensor for detecting acceleration in only two axial directions.

## Claims

1. A semiconductor acceleration sensor comprising a frame (11), a weight (12), at least one pair of beams (13) made of a semiconductor material, via which said weight is supported in said frame, at least one resistor element formed on each of said beams (13), thereby detecting acceleration according to the piezoresistive effect of said resistor element, and a wiring for electrically connecting with said resistor element,
wherein all wirings are formed in a top surface of each of said beams (13) by a doped semiconductor layer (15), and
wherein the semiconductor acceleration sensor comprises at least one bridge circuit for detecting the acceleration in at least one direction, **characterised in that** the electrical resistances of the resistor elements (R1x, R2x, R3x, R4x; R1y, R2y, R3y, R4y; R1z, R2z, R3z, R4z) and the wirings of the related doped semiconductor layers are determined such that a total amount of heat generated by the resistor elements (R1x, R3x) and the wiring of the doped semiconductor layer (15) on one beam of said pair of beams is substantially equal to the amount of heat generated by the resistor elements (R2x, R4x) and the wiring of the doped semiconductor layer on the other beam of said pair of beams.

2. The semiconductor acceleration sensor as set forth in claim 1, wherein said semiconductor acceleration sensor comprises two pairs of beams (13), one pair of which extends in an orthogonal direction to the other pair thereof, so that the semiconductor acceleration sensor has the capability of detecting acceleration in plural directions according to the piezoresistive effect of said resistor elements.

3. The semiconductor acceleration sensor as set forth in claim 1 or 2, wherein said at least one resistor element formed on each of said beams (13) are a pair of resistor elements positioned at the vicinity of one end of said beam (13) adjacent to said weight (12), and wherein the semiconductor acceleration sensor has a pair of bridge circuits for detecting the acceleration in two directions different from each other by 90 degrees, which are formed by use of said resistor elements.

4. The semiconductor acceleration sensor as set forth in claim 1 or 2, wherein said at least one resistor element formed on each of said beams are three resistor elements, two of which are positioned at the vicinity of one end of said beam adjacent to said weight (12), and the remaining one of which is positioned at the vicinity of the opposite end of said beam (13), and wherein the semiconductor acceleration sensor has three bridge circuits for detecting the acceleration in three directions different from each other by 90 degrees, which are formed by use of said resistor elements.

5. The semiconductor acceleration sensor as set forth in one of the preceding claims, wherein the wiring of said doped semiconductor layer on one of said pair of beams has the same pattern as the wiring of said doped semiconductor layer on the other beam.

6. The semiconductor sensor as set forth in any of the preceding claims, wherein said weight has a first wiring of a doped semiconductor layer formed in a top surface thereof and a second wiring of a metal layer formed on the top surface, and wherein an insulating layer is provided at an intersection of the first and second wirings to electrically insulate the first wiring from the second wiring.

7. The semiconductor acceleration sensor as set forth in one of the preceding claims, wherein each of said beams (13) has a plurality of wirings, which substantially extend in a length direction of said beam (13) such that the wirings are spaced away from each other in a width direction of said beam.

8. The semiconductor acceleration sensor as set forth in claim 7, wherein a total area of the wirings formed in the top surface of each of said beams by said doped semiconductor layers is larger than the total area of wirings free regions of the top surface thereof.

9. The semiconductor acceleration sensor as set forth in claim 1, wherein a depth of said doped semiconductor layer from the top surface of each of said beams is half of a thickness of said beam.

10. The semiconductor acceleration sensor as set forth in one of the preceding claims, wherein a doping concentration of said doped semiconductor layer is within a range of 10¹⁸/cm³ to 10²¹/cm³.

11. The semiconductor acceleration sensor as set forth in one of the preceding claims, wherein each of said beams (13) has a thermal oxide layer formed on the top surface thereof such that a thickness of said thermal oxide layer on said doped semiconductor layer is smaller than the thickness of said thermal oxide layer on a wiring free region of the top surface of said beam.

12. The semiconductor acceleration sensor as set forth in claim 7, wherein first and second regions are defined on the top surface of each of said beams (17) at both sides of a center line extending in the length direction of said beam through a center of a width of said beam (13), and wherein wiring patterns formed in the first and second regions by said doped semiconductor layers are symmetric with respect to the center line.

## Patentansprüche

1. Halbleiter-Beschleunigungssensor mit einem Rahmen (11), einem Gewicht (12), wenigstens einem Paar Träger (13), die aus einem Halbleitermaterial bestehen und mittels derer das Gewicht in dem Rahmen gelagert ist, wenigstens einem auf jedem der Träger (13) ausgebildeten Widerstandsbauelement, das gemäß dem piezoresistiven Effekt des Widerstandsbauelements eine Beschleunigung erfasst, und einer Verdrahtung zur elektrischen Verbindung mit dem Widerstandsbauelement,
wobei alle Verdrahtungen mittels einer dotierten Halbleiterschicht (15) auf einer Oberfläche jedes der Träger (13) ausgebildet sind und
wobei der Halbleiter-Beschleunigungssensor wenigstens eine Brückenschaltung zum Erfassen der Beschleunigung in wenigstens einer Richtung umfasst,
**dadurch gekennzeichnet, dass** die elektrischen Widerstände der Widerstandsbauelemente (R1x, R2x, R3x, R4x; R1y, R2y, R3y, R4y; R1z, R2z, R3z, R4z) und die Verdrahtungen der zugeordneten dotierten Halbleiterschichten so bestimmt sind, dass eine von den Widerstandsbauelementen (R1x, R3x) und der Verdrahtung der dotierten Halbleiterschicht (15) auf einem Träger des Paars von Trägern erzeugte Gesamtwärmemenge mit der von den Widerstandsbauelementen (R2x, R4x) und der Verdrahtung der dotierten Halbleiterschicht auf dem anderen Träger des Paars von Trägem erzeugten Wärmemenge im wesentlichen übereinstimmt.

2. Halbleiter-Beschleunigungssensor gemäß Anspruch 1, wobei der Halbleiter-Beschleunigungssensor zwei Trägerpaare (13) umfasst, die sich in zueinander rechtwinkligen Richtungen erstrecken, so dass der Halbleiter-Beschleunigungssensor in der Lage ist, gemäß dem piezoresistiven Effekt der Widerstandsbauelemente eine Beschleunigung in mehreren Richtungen zu erfassen.

3. Halbleiter-Beschleunigungssensor gemäß Anspruch 1 oder 2, wobei das zumindest eine auf jedem der Träger (13) ausgebildete Widerstandsbauelement ein Paar Widerstandsbauelemente darstellt, die dem Gewicht (12) benachbart in der Nähe eines Endes des Trägers (13) angeordnet sind, und wobei der Halbleiter-Beschleunigungssensor ein Paar Brückenschaltungen zur Erfassung der Beschleunigung in zwei voneinander um 90° verschiedenen Richtungen umfasst, die unter Verwendung der Widerstandsbauelemente ausgebildet sind.

4. Halbleiter-Beschleunigungssensor gemäß Anspruch 1 oder 2, wobei es sich bei dem wenigstens einen auf jedem der Träger ausgebildeten Widerstandsbauelement um drei Widerstandsbauelemente handelt, von denen zwei dem Gewicht (12) benachbart in der Nähe eines Endes des Trägers angeordnet sind und von denen das verbleibende Widerstandsbauelement in der Nähe des entgegengesetzten Endes des Trägers (13) angeordnet ist, und wobei der Halbleiter-Beschleunigungssensor drei Brückenschaltungen zur Erfassung der Beschleunigung in drei voneinander um jeweils 90° verschiedenen Richtungen aufweist, die unter Verwendung der Widerstandsbauelemente ausgebildet sind.

5. Halbleiter-Beschleunigungssensor gemäß einem der vorangehenden Ansprüche, wobei die Verdrahtung der dotierten Halbleiterschicht auf einem der Paare von Trägem dieselbe Struktur aufweist wie die Verdrahtung der dotierten Halbleiterschicht auf dem anderen Träger.

6. Halbleiter-Beschleunigungssensor gemäß einem der vorangehenden Ansprüche, wobei das Gewicht eine erste Verdrahtung einer dotierten Halbleiterschicht, die auf einer seiner Oberflächen ausgebildet ist, und eine zweite Verdrahtung einer auf der Oberfläche ausgebildeten Metallschicht aufweist und wobei eine Isolationsschicht an einer Schnittfläche der ersten und der zweiten Verdrahtung ausgebildet ist, um die erste Verdrahtung von der zweiten Verdrahtung elektrisch zu isolieren.

7. Halbleiter-Beschleunigungssensor gemäß einem der vorangehenden Ansprüche, wobei jeder der Träger (13) mehrere Verdrahtungen aufweist, die sich im wesentlichen entlang einer Längsrichtung des Trägers (13) erstrecken, so dass die Verdrahtungen in einer Querrichtung des Trägers voneinander getrennt sind.

8. Halbleiter-Beschleunigungssensor gemäß Anspruch 7, wobei eine Gesamtfläche der Verdrahtungen, die mittels der dotierten Halbleiterschichten auf der Oberfläche jedes der Träger ausgebildet sind, größer als die Gesamtfläche der verdrahtungsfreien Bereiche auf der Oberfläche ist.

9. Halbleiter-Beschleunigungssensor gemäß Anspruch 1, wobei eine Tiefe der dotierten Halbleiterschicht von der Oberfläche jedes der Träger aus die Hälfte einer Dicke des Trägers beträgt.

10. Halbleiter-Beschleunigungssensor gemäß einem der vorangehenden Ansprüche, wobei eine Dotierungskonzentration der dotierten Halbleiterschicht in einem Bereich von 10¹⁸/cm³ bis 10²¹/cm³ liegt.

11. Halbleiter-Beschleunigungssensor gemäß einem der vorangehenden Ansprüche, wobei jeder der Träger (13) eine auf seiner Oberfläche ausgebildete thermische Oxidschicht aufweist, wobei eine Dicke der thermischen Oxidschicht auf der dotierten Halbleiterschicht kleiner ist als die Dicke der thermischen Oxidschicht auf einem verdrahtungsfreien Bereich der Oberfläche des Trägers.

12. Halbleiter-Beschleunigungssensor gemäß Anspruch 7, wobei erste und zweite Bereiche auf der Oberfläche jedes der Träger (17) zu beiden Seiten einer Mittellinie, die sich entlang der Längsrichtung des Trägers durch einen Mittelpunkt einer Breite des Trägers (13) erstreckt, bestimmt sind und wobei in den ersten und zweiten Bereichen mittels der dotierten Halbleiterschichten ausgebildete Verdrahtungsstrukturen bezüglich der Mittellinie symmetrisch sind.

## Revendications

1. Capteur accélérométrique à semi-conducteur comprenant un cadre (11), un poids (12), au moins une paire de traverses (13) constituées d'un matériau semi-conducteur, par l'intermédiaire desquelles ledit poids est supporté dans ledit cadre, au moins un élément de résistance formé sur chacune desdites traverses (13), détectant ainsi une accélération selon l'effet piézorésistif dudit élément résistant, et un câblage destiné à se connecter électriquement avec ledit élément de résistance,
dans lequel tous les câblages sont formés dans une surface supérieure de chacune desdites traverses (13) par une couche de semi-conducteur dopé (15), et
dans lequel le capteur accélérométrique à semi-conducteur comprend au moins un circuit pont destiné à détecter l'accélération dans au moins une direction, **caractérisé en ce que** les résistances électriques des éléments de résistance (R1x, R2x, R3x, R4x ; R1y, R2y, R3y, R4y ; R1z, R2z, R3z, R4z) et les câblages des couches de semi-conducteur dopé s'y rapportant sont déterminées de telle sorte qu'une quantité totale de chaleur générée par les éléments de résistance (R1x, R3x) et le câblage de la couche de semi-conducteur dopé (15) sur une traverse de ladite paire de traverses est substantiellement égale à la quantité de chaleur générée par les éléments de résistance (R2x, R4x) et le câblage de la couche de semi-conducteur dopé sur l'autre traverse de ladite paire de traverses.

2. Capteur accélérométrique à semi-conducteur tel qu'exposé selon la revendication 1, dans lequel ledit capteur accélérométrique à semi-conducteur comprend deux paires de traverses (13), une paire desquelles s'étend dans une direction orthogonale à l'autre paire de celles-ci, de façon à ce que le capteur accélérométrique à semi-conducteur ait la capacité de détecter une accélération dans des directions multiples selon l'effet piézorésistif desdits éléments de résistance.

3. Capteur accélérométrique à semi-conducteur tel qu'exposé selon la revendication 1 ou 2, dans lequel ledit au moins un élément de résistance formé sur chacune desdites traverses (13) consistent en une paire d'éléments de résistance positionnée au voisinage d'une extrémité de ladite traverse (13) adjacente audit poids (12), et dans lequel le capteur accélérométrique à semi-conducteur comporte une paire de circuits pont destinés à détecter l'accélération dans deux directions différentes de 90 degrés l'une par rapport à l'autre, qui sont formés par l'utilisation desdits éléments de résistance.

4. Capteur accélérométrique à semi-conducteur tel qu'exposé selon la revendication 1 ou 2, dans lequel ledit au moins un élément de résistance formé sur chacune desdites traverses consistent en trois éléments de résistance, dont deux sont positionnés au voisinage d'une extrémité de ladite traverse adjacente audit poids (12), et dont celle qui reste est positionnée au voisinage de l'extrémité opposée de ladite traverse (13), et dans lequel le capteur accélérométrique à semi-conducteur comporte trois circuits pont destinés à détecter l'accélération dans trois directions différentes de 90 degrés les unes par rapport aux autres, qui sont formés par l'utilisation desdits éléments de résistance.

5. Capteur accélérométrique à semi-conducteur tel qu'exposé selon l'une des revendications précédentes, dans lequel le câblage de ladite couche de semi-conducteur dopé se trouvant sur une desdites paires de traverses présente le même motif que le câblage de ladite couche de semi-conducteur dopé se trouvant sur l'autre traverse.

6. Capteur accélérométrique à semi-conducteur tel qu'exposé selon l'une quelconque des revendications précédentes, dans lequel ledit poids comporte un premier câblage constitué d'une couche de semi-conducteur dopé formé sur une surface supérieure de celui-ci et un deuxième câblage constitué d'une couche métallique formée sur la surface supérieure, et dans lequel une couche isolante est prévue à une intersection des premier et deuxième câblages pour isoler électriquement le premier câblage par rapport au deuxième câblage.

7. Capteur accélérométrique à semi-conducteur tel qu'exposé selon l'une des revendications précédentes, dans lequel chacune desdites traverses (13) comporte une pluralité de câblages, qui s'étendent substantiellement dans une direction longitudinale de ladite traverse (13) de telle sorte que les câblages soient espacés à distance les uns des autres dans une direction transversale de ladite traverse.

8. Capteur accélérométrique à semi-conducteur tel qu'exposé selon la revendication 7, dans lequel une aire totale des câblages formés sur la surface supérieure de chacune desdites traverses par lesdites couches de semi-conducteur dopé est plus grande que l'aire totale des régions dépourvues de câblage de la surface supérieure de celles-ci.

9. Capteur accélérométrique à semi-conducteur tel qu'exposé selon la revendication 1, dans lequel une profondeur de ladite couche de semi-conducteur dopé à partir de la surface supérieure de chacune desdites traverses représente la moitié d'une épaisseur de ladite traverse.

10. Capteur accélérométrique à semi-conducteur tel qu'exposé selon l'une des revendications précédentes, dans lequel une concentration de dopage de ladite couche de semi-conducteur dopé se situe à l'intérieur d'une plage de 10¹⁸/cm³ à 10²¹/cm³.

11. Capteur accélérométrique à semi-conducteur tel qu'exposé selon l'une des revendications précédentes, dans lequel chacune desdites traverses (13) comporte une couche d'oxyde thermique formée sur la surface supérieure de celle-ci de telle sorte qu'une épaisseur de ladite couche d'oxyde thermique se trouvant sur ladite couche de semi-conducteur dopé soit plus petite que l'épaisseur de ladite couche d'oxyde thermique se trouvant sur une région dépourvue de câblage de la surface supérieure de ladite traverse.

12. Capteur accélérométrique à semi-conducteur tel qu'exposé selon la revendication 7, dans lequel les première et deuxième régions sont définies sur la surface supérieure de chacune desdites traverses (17) au niveau des deux côtés d'une ligne centrale s'étendant dans la direction longitudinale de ladite traverse par un centre d'une largeur de ladite traverse (13), et dans lequel les motifs de câblage formés dans les première et deuxième régions par lesdites couches de semi-conducteur dopé sont symétriques par rapport à la ligne centrale.
